(19) Europäisches Patentamt
European Patent Office
Office européen des brevets

(11) **EP 4 502 026 A1**

(12) **EUROPEAN PATENT APPLICATION**
published in accordance with Art. 153(4) EPC

(43) Date of publication:
**05.02.2025 Bulletin 2025/06**

(21) Application number: **23778973.0**

(22) Date of filing: **16.02.2023**

(51) International Patent Classification (IPC):
***C08J 9/18*** *(2006.01)*

(52) Cooperative Patent Classification (CPC):
**C08J 9/18**

(86) International application number:
**PCT/JP2023/005350**

(87) International publication number:
**WO 2023/188942 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022055935**

(71) Applicant: **Kaneka Corporation
Osaka-shi, Osaka 530-8288 (JP)**

(72) Inventor: **MINAMIDA, Yoshiaki
Settsu-shi, Osaka 566-0072 (JP)**

(74) Representative: **Vossius & Partner
Patentanwälte Rechtsanwälte mbB
Siebertstrasse 3
81675 München (DE)**

(54) **POLY(3-HYDROXYALKANOATE)-BASED RESIN FOAM PARTICLES**

(57) An object is to provide P3HA-based resin expanded particles that make it possible to provide a P3HA-based resin in-mold expanded product having excellent strength in extremely low temperature environments. The object is attained by providing P3HA-based resin expanded particles obtained by expanding resin particles that contain P3HA-based resin, in which: the resin particles contain two or more types of P3HA-based resins that differ in structural unit composition from each other; and the P3HA-based resin expanded particles have a glass transition temperature of 2.0°C or lower.

**EP 4 502 026 A1**

## EP 4 502 026 A1

**Description**

Technical Field

The present invention relates to poly(3-hydroxyalkanoate)-based resin expanded particles and an in-mold expanded product of the poly(3-hydroxyalkanoate)-based resin expanded particles.

Background Art

Petroleum-derived plastics are disposed in large quantities every year, and a shortage of landfill sites and environmental pollution due to these large quantities of waste are taken up as serious problems. In recent years, microplastics have been a major problem in a marine environment. Thus, biodegradable plastics degraded by the action of microorganisms in the environment such as the sea and soil and in landfill sites and compost have attracted attention.

Biodegradable plastics have been developed for a wide range of applications, including agricultural, forestry, and fishery materials used in the environment and food containers, packaging materials, sanitary materials, and garbage bags that are difficult to recycle and reuse after use. In addition, foamed products made from biodegradable plastic are expected to be used for, for example, cushioning materials for packaging, produce boxes, fish boxes, automotive components, building materials, and civil engineering materials.

Among the above-described biodegradable plastics, poly(3-hydroxyalkanoate)-based resin (poly(3-hydroxyalkanoate) will be hereinafter also referred to as "P3HA") has attracted attention as a plastic derived from a plant material from the viewpoint of excellent biodegradability and carbon neutrality.

The development of techniques relating to biodegradable plastics has conventionally been pursued. For example, Patent Literature 1 discloses expanded particles that are obtained with use of a P3HA-based resin with biodegradability and an in-mold expanded product that is obtained by in-mold expansion molding of the expanded particles.

Citation List

[Patent Literature]

[Patent Literature 1]
International Publication No. WO 2019/146555

Summary of Invention

Technical Problem

However, the aforementioned conventional technology have room for improvement from the viewpoint of achieving sufficient strength when an in-mold expanded product obtained by molding P3HA-based resin expanded particles is used in extremely low temperature (-20°C or lower) environments.

Therefore, an object of an aspect of the present invention is to provide P3HA-based resin expanded particles that make it possible to provide a P3HA-based resin in-mold expanded product having excellent strength in extremely low temperature environments.

Solution to Problem

In order to attain the object, the inventors of the present invention conducted diligent research. As a result, the inventors of the present invention found that if P3HA-based resin expanded particles obtained by expanding resin particles containing P3HA-based resin are configured so that the resin particles contain two or more types of P3HA-based resins which differ in structural unit composition and that the glass transition temperature (Tg) of the P3HA-based resin expanded particles falls within a specific range, it is possible to obtain a P3HA-based resin in-mold expanded product which has excellent strength even when used in an extremely low temperature environment. The inventors of the present invention thus completed the present invention.

Therefore, an aspect of the present invention is P3HA-based resin expanded particles obtained by expanding resin particles that contain P3HA-based resin, in which: the resin particles contain two or more types of P3HA-based resins that differ in structural unit composition from each other; and the P3HA-based resin expanded particles have a glass transition temperature of 2.0°C or lower.

Advantageous Effects of Invention

With an aspect of the present invention, it is possible to provide P3HA-based resin expanded particles that make it possible to provide a P3HA-based resin in-mold expanded product having excellent strength in an extremely low temperature environment.

Description of Embodiments

The following description will discuss an embodiment of the present invention in detail. Note that any numerical range expressed as "A to B" in the present specification means "not less than A and not more than B" unless otherwise stated.

[1. Overview of present invention]

As discussed above, the conventional technologies relating to in-mold expanded product obtained by molding P3HA-based resin expanded particles have room for improvement from the viewpoint of achieving sufficient strength when the in-mold expanded product is used in an extremely low temperature (-20°C or lower) environment.

Therefore, the inventors of the present invention conducted diligent research. As a result, the inventors of the present invention discovered for the first time that, in the production of P3HA-based resin expanded particles obtained by expanding resin particles containing P3HA-based resin, by using the resin particles containing two or more types of P3HA-based resins which differ in structural unit composition and causing the glass transition temperature of the P3HA-based resin expanded particles to be 2.0°C or lower, it is possible to obtain a P3HA-based resin in-mold expanded product which has excellent strength even when used in an extremely low temperature environment. The improvement in strength in an extremely low temperature environment is a surprising effect that could not have been inferred from the structural units of the P3HA-based resin or the glass transition temperature of the P3HA-based resin expanded particles, even by a person skilled in the art.

The P3HA-based resin expanded particles in accordance with an aspect of the present invention makes it possible to provide a P3HA-based resin in-mold expanded product having excellent strength in an extremely low temperature environment, and is therefore extremely useful for applications particularly in extremely low temperature environments. In the present specification, "extremely low temperature environment" refers to an environment at -20°C or lower.

In addition, the aforementioned features make it possible to provide a P3HA-based resin in-mold expanded product having excellent strength in an extremely low temperature environment, and therefore make it possible to contribute to the achievement of the Sustainable Development Goals (SDGs) such as Goal 12 "Ensure sustainable consumption and production patterns" and Goal 14 "Conserve and sustainably use the oceans, seas and marine resources for sustainable development". The following description will discuss an embodiment of the present invention in detail.

[2. P3HA-based resin expanded particles]

A P3HA-based resin expanded particles in accordance with an embodiment of the present invention are obtained by expanding resin particles that contain P3HA-based resin, in which: the resin particles contain two or more types of P3HA-based resins that differ in structural unit composition from each other; and the P3HA-based resin expanded particles have a glass transition temperature of 2.0°C or lower. In the present specification, "P3HA-based resin expanded particles" are also called "expanded particles".

[2-1. P3HA-based resin]

A P3HA-based resin in accordance with an embodiment of the present invention is a polymer that has a 3-hydroxyalkanoate unit as an essential structural unit (monomer unit). In the present specification, "3-hydroxyalkanoate" may also be referred to as "3HA". Specifically, the P3HA-based resin is preferably a polymer including a repeating unit represented by the following general formula (1):

$$[-CHR-CH_2-CO-O-] \dots \qquad (1).$$

In general Formula (1), R represents an alkyl group expressed by $C_nH_{2n+1}$, and n represents an integer of 1 to 15. Examples of R include linear or branched alkyl groups such as a methyl group, an ethyl group, a propyl group, an isopropyl group, a butyl group, an isobutyl group, a t-butyl group, a pentyl group, and a hexyl group. n is preferably 1 to 10, and more preferably 1 to 8.

As the P3HA-based resin, a P3HA-based resin produced from microorganisms, in particular, is preferable. The P3HA-based resin produced from microorganisms is poly[(R)-3HA] in which 3HA units are all (R)-3HA.

The P3HA-based resin includes preferably 50 mol% or more of 3HA units (in particular, the repeating unit of general formula (1)), more preferably 70 mol% or more of 3HA units, and even more preferably 80 mol% or more of 3HA units in 100 mol% of all the repeating units of the P3HA-based resin. The repeating units (monomer units) may be 3HA units only or may include, in addition to the 3HA unit, a repeating unit derived from a monomer other than 3HA (e.g., a 4-hydroxyalkanoate unit and the like).

Specific examples of the 3HA units include a 3-hydroxybutyrate unit, a 3-hydroxyvalerate unit, and a 3-hydroxyhexanoate unit. 3-hydroxybutyrate is close to propylene in terms of a melting point and tensile strength. Therefore, the P3HA-based resin in accordance with an embodiment of the present invention preferably includes a 3-hydroxybutyrate unit. In the present specification, hereinafter, "3-hydroxybutyrate" may also be referred to as "3HB".

The P3HA-based resin includes the 3HB units (monomer units) in an amount of preferably 65 mol% or more and more preferably 70 mol% or more, in 100 mol% of all the repeating units of the P3HA-based resin. The P3HA is particularly preferably a polymer which includes 3HB units and in which all 3HB are (R)-3HB (polymer produced by microorganisms).

In a case where the P3HA-based resin contains two or more repeating units, the monomer that is derived from a repeating unit other than a repeating unit contained in the highest amount in P3HA is referred to as a comonomer. In the present specification, a "repeating unit derived from a comonomer" may also be referred to as "comonomer unit".

The comonomer is not particularly limited, and is preferably 3-hydroxyhexanoate (hereinafter may also be referred to as 3HH), 4-hydroxybutyrate (hereinafter may also be referred to as 4HB), or the like.

Specific examples of the P3HA-based resin include poly(3-hydroxybutyrate), poly(3-hydroxybutyrate-co-3-hydroxypropionate), poly(3-hydroxybutyrate-co-3-hydroxyvalerate) (hereinafter may be referred to as "P3HB3HV"), poly(3-hydroxybutyrate-co-3-hydroxyvalerate-3-hydroxyhexanoate), poly(3-hydroxybutyrate-co-3-hydroxyhexanoate) (hereinafter may be referred to as "P3HB3HH") poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) (hereinafter may be referred to as "P3HB4HB"). In particular, from the viewpoint of, for example, processability and physical properties of an in-mold expanded product, poly(3-hydroxybutyrate), poly(3-hydroxybutyrate-co-3-hydroxyvalerate), poly(3-hydroxybutyrate-co-3-hydroxyvalerate-co-3-hydroxyhexanoate), poly(3-hydroxybutyrate-co-3-hydroxyhexanoate), or poly(3-hydroxybutyrate-co-4-hydroxybutyrate) are preferable, and poly(3-hydroxybutyrate-co-3-hydroxyhexanoate) is more preferable.

In the present specification, P3HA-based resins that have identical names (compound names) and differ in content ratio (monomer ratio) of structural units (monomer units and comonomer units) which constitute the P3HA-based resin are regarded as P3HA-based resins of different types. Therefore, as the P3HA-based resin, among the aforementioned P3HA-based resins, it is possible to use only the P3HA-based resins having different monomer ratios and identical names (compound names) or to use a combination of P3HA-based resins having different names.

The P3HA-based resin preferably has a 3HB unit as an essential structural unit and has a comonomer unit. That is, the P3HA-based resin is preferably a copolymer having a 3HB unit and a comonomer unit. When the P3HA-based resin has 3HB units and comonomer units, the ratio of the 3HB units to the comonomer units (3HB unit/comonomer units) in the total 100 mol% of structural units in the P3HA-based resin is preferably 99.0/1.0 (mol%/mol%) to 69.0/31.0 (mol%/mol%), more preferably 98.5/1.5 (mol%/mol%) to 69.5/30.5 (mol%/mol%), and even more preferably 98.0/2.0 (mol%/mol%) to 70.0/30.0 (mol%/mol%). If the ratio of the comonomer units to the total 100 mol% of structural units in the P3HA-based resin is 1.0 mol% or more, the temperature range in which the P3HA-based resin can be melt-kneaded and the thermal decomposition temperature range of the P3HA-based resin are sufficiently separated. This brings about such an advantage as having a wide preferable molding processing range. If the ratio of the comonomer units to the total 100 mol% of structural units in the P3HA-based resin is 31.0 mol% or less, the crystallization of the P3HA-based resin-based composition during melt-kneading is fast, and thus productivity is high. It should be noted that the content ratio of each monomer unit in the P3HA-based resin can be determined by methods known to a person skilled in the art, such as the method disclosed in International Publication No. WO 2013/147139.

Although not particularly limited, the melting point of the P3HA-based resin is preferably 110.0°C to 165.0°C, more preferably 120.0°C to 155.0°C, and even more preferably 130.0°C to 145.0°C. If the melting point of the P3HA-based resin is 110.0°C or higher, dimensional changes are unlikely to occur in an in-mold expanded product obtained upon heating. If the melting point of the P3HA-based resin is 165.0°C or lower, hydrolysis is unlikely to occur during the expansion step.

It should be noted here that the melting point of the P3HA-based resin refers to a melting point measured via differential scanning calorimetry (hereinafter also referred to as "DSC"). Specific procedures are as follows: (1) 5 mg to 6 mg of P3HA is weighed; (2) the temperature of the P3HA is raised from 10.0°C to 190.0°C at a temperature increase rate of 10.0°C/min to melt the P3HA; and (3) the melting point of the P3HA can be determined as the temperature of the highest melting peak on the DSC curve of the P3HA obtained in the step (2).

Although not particularly limited, the weight average molecular weight of the P3HA-based resin is preferably 200,000 to 2,000,000, more preferably 250,000 to 1,500,000, and even more preferably 300,000 to 1,000,000. If the weight average molecular weight of the P3HA is 200,000 or more, resultant expanded particles are unlikely to have a low closed cell ratio. If the weight average molecular weight is 2,000,000 or less, the load on the machine during the melt-kneading of the P3HA composition is reduced. This results in good productivity. It should be noted that the weight average molecular weight of the P3HA can be measured by gel permeation chromatography (HPLC GPC system manufactured by Shimadzu Corporation) using a chloroform solution with a polystyrene equivalent molecular weight distribution. For the column in the gel permeation chromatography, a known column that is suitable for measuring the weight average molecular weight may be used.

In an embodiment of the present invention, the method for producing the P3HA-based resin is not particularly limited, and may be a production method using chemical synthesis or may be a production method using a microorganism. Among these methods, a production method using microorganisms is preferable. To the P3HA production method using microorganisms, known methods such as the one disclosed in International Publication No. WO 2009/145164 and the one disclosed in International Publication No. WO 2019/142845 can be applied.

The microorganisms that produce the microbial P3HB are not limited to any particular one, provided that the microorganisms are capable of producing a type of P3HA. For example, the first P3HB-producing bacterium discovered was Bacillus megaterium (discovered in 1925), and other examples of the P3HB-producing bacterium include natural microorganisms such as Cupriavidus necator (previously classified as Alcaligenes eutrophus), Ralstonia eutropha, and Alcaligenes latus. These microorganisms are known to accumulate P3HB within bacterial cells of the microorganisms.

Specific examples of the bacterium that produces a copolymer of 3HB and another hydroxyalkanoate include Aeromonas caviae, which is a bacterium capable of producing P3HB3HV and P3HB3HH, and Alcaligenes eutrophus, which is a bacterium capable of producing P3HB4HB. In particular, regarding P3HB3HH, for example, an Alcaligenes eutrophus AC32 strain (Alcaligenes eutrophus AC32, FERM BP-6038) (T. Fukui, Y. Doi, J. Bateriol., 179, p. 4821-4830 (1997)) into which genes of a group of P3HA synthases have been introduced to increase productivity of P3HB3HH is more preferable. In a method for producing P3HA, microorganism bacterial cells obtained by culturing microorganisms, such as an Alcaligenes eutrophus AC32 strain, under appropriate conditions and accumulating P3HB3HH in bacterial cells of the microorganisms are suitably used. Regarding the copolymer-producing bacterium, besides the above, a genetically modified microorganism into which various P3HA synthesis-related genes have been introduced may be used in accordance with P3HA that is desired to be produced. In addition, regarding culture conditions for a microorganism (bacterium), various culture conditions including a type of substrate may be optimized in accordance with P3HA that is desired to be produced.

[2-2. P3HA-based resin particles]

A P3HA-based resin particles in accordance with an embodiment of the present invention are particles that are constituted by a composition (P3HA-based composition) containing P3HA as an essential component and that contain two or more types of P3HA-based resins that differ in structural unit composition. In the present specification, the concept of "P3HA-based resins differing in structural unit composition" includes both a "case where the types of structural units constituting the P3HA-based resins differ" and a "case where the P3HA-based resins contain two or more identical types of structural units and differ in the content ratio (monomer ratio) of the structural units".

The composition typically contains P3HA-based resin and an additive as necessary. In the specification of the present application, "(3-hydroxyalkanoate)-based resin particles" may also be referred to as "resin particles". In the present application, "resin particles" refer to particles that have not yet been subjected to the expansion step and that have thus not been expanded.

The P3HA-based resin content of the resin particles is not particularly limited; however, for excellent biodegradability of resultant expanded particles and a resultant in-mold expanded product, the P3HA-based resin content is preferably 70% by weight or more and more preferably 80% by weight or more, with respect to 100% by weight of the expanded particles.

If the P3HA-based resin contained in the resin particles is a copolymer having 3HB units and comonomer units, the average content ratio of the comonomer units in 100 mol% of all the repeating units in the copolymer is preferably 6.5 mol% to 12.0 mol%, more preferably 6.6 mol% to 11.8 mol%, even more preferably 6.7 mol% to 11.6 mol%. If the average content ratio of the comonomer units in 100 mol% of all the repeating units in the copolymer is 6.5 mol% to 12.0 mol%, there is an advantage of having excellent strength at low temperatures.

From the viewpoint of excellent physical properties and/or molding processability, the resin particles in accordance with an embodiment of the present invention preferably contain P3HB3HH as the P3HA-based resin. The resin particles may contain P3HB3HH and P3HA-based resin other than P3HB3HH, and may contain P3HB3HH (A) and P3HB3HH (B), which contain 3HB units and 3HH units at different ratios (monomer ratios) of the 3HB unit to the 3HH unit.

If the P3HA-based resin contained in the resin particles is a copolymer having 3HB units and comonomer units, the resin particles preferably contain: a copolymer (A) in which the content ratio of the comonomer units in 100 mol% of all the repeating units is 1.0 mol% to 6.0 mol%; and a copolymer (B) in which the content ratio of the comonomer units in 100 mol% of all the repeating units is 13.0 mol% or more. From the viewpoint of stability of crystallization speed, the content ratio of the comonomer units in 100 mol% of all the repeating units in the copolymer (A) is preferably 1.0 mol% to 6.0 mol%, more preferably 1.2 mol% to 5.9 mol%, and even more preferably 1.4 mol% to 5.8 mol%. From the viewpoint of achieving strength at low temperatures, the content ratio of the comonomer units in 100 mol% of all the repeating units in the copolymer (B) is preferably 13.0 mol% or more, more preferably 14.0 mol% or more, and even more preferably 15.0 mol% or more.

With respect to the total 100% by weight of the copolymer (A) and the copolymer (B), the weight of the copolymer (A) contained in the resin particles is preferably 65% or more, more preferably 70% or more, and even more preferably 75% or more. This brings about such an advantage as being able to adjust the physical properties of a resultant in-mold expanded product.

The resin particles in accordance with an embodiment of the present invention may contain an additive(s), provided that the effects of the present invention are not inhibited. As the additive, for example, crystal nucleating agents, cell adjusting agents, lubricants, plasticizers, antistatic agents, flame retardants, electrically conductive agents, heat insulating agents, crosslinking agents, antioxidants, ultraviolet ray absorbing agents, coloring agents, inorganic fillers, organic fillers, hydrolysis inhibitors, and the like can be used according to the purpose. As the additive, an additive having biodegradability, in particular, are preferable. It should be noted that "crystal nucleating agent" is also referred to as "crystallization nucleating agent". For the type of the additive, the method for using the additive, and the like, the type and the use method disclosed in International Publication No. WO 2021/002092 can be used.

Examples of the crystal nucleating agents include pentaerythritol, orotic acid, aspartame, cyanuric acid, glycine, zinc phenylphosphonate, and boron nitride. Among these, pentaerythritol has particularly excellent P3HA crystallization promoting effect, and is therefore preferable.

Although not particularly limited, the crystal nucleating agent content of the resin particles is preferably 0.1 parts by weight to 5.0 parts by weight, more preferably 0.5 parts by weight to 3.0 parts by weight, and even more preferably 0.7 parts by weight to 1.5 parts by weight, with respect to 100 parts by weight of P3HA. One of these crystal nucleating agents may be used alone, or two or more thereof may be used in admixture. When two or more crystal nucleating agents are used in admixture, a mixing ratio may be adjusted as appropriate according to the purpose.

Examples of the cell adjusting agents include talc, silica, calcium silicate, calcium carbonate, aluminum oxide, titanium oxide, diatomaceous earth, clay, sodium bicarbonate, alumina, barium sulfate, aluminum oxide, and bentonite. Among these, talc is preferable in that talc is particularly excellent in dispersibility to P3HA.

Although not particularly limited, the cell adjusting agent content of the resin particles is preferably 0.01 parts by weight to 1.0 part by weight, more preferably 0.03 parts by weight to 0.5 parts by weight, and even more preferably 0.05 parts by weight to 0.3 parts by weight, with respect to 100 parts by weight of P3HA. One of these cell adjusting agents may be used alone, or two or more thereof may be used in admixture. In a case where two or more cell adjusting agents are used in admixture, a mixing ratio may be adjusted as appropriate according to the purpose.

Examples of the lubricant include behenic acid amide, oleic acid amide, erucic acid amide, stearic acid amide, palmitic acid amide, N-stearylbehenic acid amide, N-stearylerucic acid amide, ethylenebisstearic acid amide, ethylenebisoleic acid amide, ethylenebiserucic acid amide, ethylenebislauryl acid amide, ethylenebiscapric acid amide, p-phenylenebisstearic acid amide, and a polycondensate of ethylenediamine, stearic acid, and sebacic acid. Among these lubricants, behenic acid amide and/or erucic acid amide are preferable in that the lubricant effect on P3HA is particularly excellent.

Although not particularly limited, the lubricant content of the resin particles is preferably 0.01 parts by weight to 5.0 parts by weight, more preferably 0.05 parts by weight to 3.0 parts by weight, and even more preferably 0.1 parts by weight to 1.5 parts by weight, with respect to 100 parts by weight of P3HA. One of these lubricants may be used alone, or two or more thereof may be used in admixture. In a case where two or more lubricants are used in mixture, the mixing ratio can be adjusted as appropriate according to a purpose.

The resin particles in accordance with an embodiment of the present invention may further contain resin components other than P3HA (hereinafter referred to also as "other resin components"). Examples of the other resin components include (a) aliphatic polyesters such as polylactic acid, polybutylene succinate, polybutylene succinate adipate, polybutylene adipate terephthalate, polybutylene succinate terephthalate, and polycaprolactone and (b) aliphatic aromatic polyester.

Although not particularly limited, the other resin components content of the resin particles is preferably 10 parts by weight to 400 parts by weight and more preferably 50 parts by weight to 150 parts by weight, with respect to 100 parts by weight of P3HA. One of these other resin components may be used alone, or two or more thereof may be used in admixture.

The glass transition temperature of the resin particles is 1.0°C or lower, preferably 0.8°C or lower, and more preferably 0.6°C or lower. If the glass transition temperature of the resin particles is 1.0°C or lower, it is possible to obtain a P3HA-based resin in-mold expanded product having excellent strength even when used in an extremely low temperature environment. Although not particularly limited, the lower limit of the glass transition temperature of the resin particles is, for example, -8.0°C or higher, preferably -7.5°C or higher, more preferably -7.0°C or higher, and even more preferably -6.5°C or higher. In particular, when the lower limit of the glass transition temperature of the resin particles is - 6.5°C or higher, there is such an effect as having excellent shrinkage.

Although not particularly limited, the melting point (hereinafter also referred to as "Tmp") of the resin particles is preferably 110.0°C to 165.0°C, more preferably 120.0°C to 155.0°C, and even more preferably 130.0°C to 145.0°C. If the melting point of the resin particles is 110.0°C or higher, dimensional changes due to heating during the molding of the resultant expanded particles can be suppressed. If the melting point of the resin particles is 165.0°C or lower, hydrolysis of P3HA is unlikely during the expansion of the resin particles. It should be noted that components other than P3HA contained in the resin particles (for example, additives) hardly have any effects on the melting point of the resin particles. In other words, the melting point of the resin particles can be said to be the melting point of the P3HA contained in the resin particles.

It should be noted here that the melting point (Tmp) of the resin particles refers to that measured via differential scanning calorimetry (hereinafter also referred to as "DSC"). Specific procedures are as follows: (1) 5 mg to 6 mg of the resin particles is weighed; (2) the temperature of the resin particles is raised from 10°C to 190°C at a temperature increase rate of 10°C/min to melt the resin particles; and (3) the melting point of the resin particles can be determined as the temperature of the highest melting peak on the DSC curve of the resin particles obtained in the step (2).

The melt flow rate (hereinafter also referred to as "MFR") of the resin particles at 165°C is preferably 1.0 g/10 min to 20.0 g/10 min, more preferably 1.0 g/10 min to 17.0 g/10 min, and even more preferably 1.0 g/10 min to 15.0 g/10 min. If the MFR is 1.0 g/10 min or more, it is possible to obtain expanded particles having high apparent density in a single expansion. If the MFR is 20.0 g/10 min or less, the strength of a resultant in-mold expanded product is high. The MFR of the resin particles can be determined by using Melt Flow Index Tester (manufactured by Yasuda Seiki Seisakusho Ltd.) to carry out measurement in accordance with JIS K7210 under the conditions in which: the load is 5 kg; and the measurement temperature is in the range from the temperature 5°C to 10°C higher than the melting end temperature as read from the DSC curve obtained in the measurement of the melting point of the resin particles.

Although not particularly limited, the weight per single resin particle is preferably 0.3 mg to 10.0 mg and more preferably 0.5 mg to 5.0 mg. If the weight per single resin particle is 0.3 mg or more, the resin particles can be stably produced with high productivity. If the weight per single resin particle is 10.0 mg or less, the expanded particles obtained from the resin particles make it possible to easily provide a thin in-mold expanded product.

Although the shape of the resin particles is not particularly limited, the ratio of the length to diameter (length/-diameter) is preferably 0.5 to 3.0, more preferably 1.5 to 2.7, and even more preferably 2.0 to 2.5. If the ratio of the length to diameter of the resin particles is 0.5 to 3.0, a resultant expanded particles are less likely to be flattened and more likely to be spherical or substantially spherical. Spherical or substantially spherical expanded particles have a good property of being filled into a molding space of a mold of a molding machine, and can make it possible to provide an in-mold expanded product having good surface appearance. It should be noted here that the length of a resin particle refers to the maximum value of the distance between two cross sections that appear (occur) on the resin particle obtained by cutting a resin particle during the process of producing resin particles. Next, where the length direction of the resin particle is defined as an x-direction, any straight line y and a straight line z, which is perpendicular to the straight line y, are drawn on the cross section (cross section x) that is perpendicular to the x-direction. The line segment obtained by cutting the straight line y with the cross section x is defined as a line segment y, and the line segment obtained by cutting the straight line z with the cross section x is defined as a line segment z. The diameter of the resin particle refers to the average value of the lengths of the line segment y and the line segment z.

(Resin particle preparation step)

The step of preparing the resin particles in accordance with an embodiment of the present invention is a step of preparing P3HA-based resin particles that contain P3HA and, as necessary, additives. The resin particle preparation step can be carried out before the expansion step discussed later. It can also be said that the resin particle preparation step is a step of molding a resin composition containing P3HA into a shape that is easy to use for expansion. An aspect of the resin particle preparation step is not particularly limited, provided that it is possible to obtain resin particles.

The resin particle preparation step preferably includes:

(a) a melt-kneading step of melt-kneading a resin composition containing P3HA and, as necessary, additives; and
(b) a particle molding step of molding a melt-kneaded resin composition into a shape that is easy to use for expansion.

An aspect of the melt-kneading step is not particularly limited, provided that it is possible to obtain a melt-kneaded resin composition. Specific examples of the melt-kneading step include the following methods (a1) and (a2):

(a1) a method in which P3HA and, as necessary, additives are mixed or blended with use of, for example, a mixing device so as to prepare a resin composition, and then the resin composition is supplied to a melt-kneading device and melt-kneaded; and

(a2) a method in which P3HA and, as necessary, additives are supplied to a melt-kneading device, and a resin composition is prepared (completed) and the resin composition is melt-kneaded in the melt-kneading device.

In the method (a1), the order in which the P3HA and, as necessary the additives are mixed or blended (dry blended) is not particularly limited. In the method (a2), the order in which the P3HA and, as necessary, the additives are supplied to the melt-kneading device is not particularly limited.

In the method (a1), the mixing device is not limited, and examples of the mixing device include a ribbon blender, a flash blender, a tumbler mixer, and Supermixer.

In the methods (a1) and (a2), the melt-kneading device is not limited to any particular one, and examples of the melt-kneading device include an extruder, a kneader, a Banbury mixer, and a roll. The melt-kneading device is preferably an extruder and more preferably a twin screw extruder because they are excellent in productivity and convenience.

In the method (a1), the types and amounts of P3HA and additives used for mixing or blending will be the types and contained amounts of P3HA and additives in the resultant resin particles. In the method (a2), the types and amounts of P3HA and additives supplied to the melt-kneading device will be the types and contained amounts of P3HA and additives in the resultant resin particles. In addition, the types and contained amounts of P3HA and additives in the resin particles will be the types and contained amounts of P3HA and additives in the expanded particles to be obtained using the resin particles. Therefore, the description in the section on additives above applies to, for example, the types, used amounts, and supplied amounts of the additives. It should be noted that, in the resin particle preparation step, it is unnecessary to use all the additives used in the expanded particle production method. In other words, all or part of the additives used in the expanded particle production method (e.g., a crosslinking agent) may be added to a dispersion slurry in the subsequent expansion step (e.g., dispersion step), without being used in the resin particle preparation step, that is, without being contained in the resin particles.

In the melt-kneading step, a temperature employed when the resin composition is melt-kneaded cannot be generally defined because such a temperature depends on, for example, physical properties (melting point, weight average molecular weight, etc.) of P3HA and the type of additive used. With regard to the temperature employed when the resin composition is melt-kneaded, for example, a temperature of a melt-kneaded resin composition discharged from a nozzle of a die (hereinafter may be referred to as a composition temperature) is preferably 150°C to 200°C, more preferably 160°C to 195°C, and even more preferably 170°C to 190°C. If the composition temperature is 150°C or higher, it is unlikely that the resin composition is insufficiently melt-kneaded. If the composition temperature is 200°C or lower, pyrolysis of P3HA is unlikely to occur.

An aspect of the particle molding step is not particularly limited, provided that it is possible to mold a melt-kneaded resin composition into a desired shape. The use of a melt-kneading device including a die and a cutting device as the above-described melt-kneading device makes it possible to easily mold the melt-kneaded resin composition into a desired shape in the particle molding step. Specifically, the molding into a desired shape is achieved by discharging the melt-kneaded resin composition from the nozzle of the die provided in the melt-kneading device and cutting the resin composition by the cutting device simultaneously with the discharge or after the discharge. The shape of the resultant resin particles is not particularly limited, and is preferably a cylindrical shape, an elliptical columnar shape, a spherical shape, a cubic shape, a rectangular parallelepiped shape, or the like shape because they are easily utilized for expansion.

In the particle molding step, the resin composition discharged from the nozzle of the die may be cooled. When the resin composition discharged from the nozzle of the die is cooled, the resin composition may be cut by the cutting device simultaneously with cooling of the resin composition or after the resin composition has been cooled.

In the particle molding step, when the resin composition discharged from the nozzle of the die is cooled, a temperature exhibited by a cooled resin composition (hereinafter may be referred to as a cooling temperature) is not particularly limited. The cooling temperature is preferably 20°C to 80°C, more preferably 30°C to 70°C, and even more preferably 40°C to 60°C. This allows the melt-kneaded resin composition to be crystallized sufficiently quickly, and thus has an advantage of achieving good productivity of the resin particles.

[2-3. P3HA-based resin expanded particles]

(Glass transition temperature of expanded particles)

The glass transition temperature of the expanded particles is 2.0°C or lower, preferably 1.8°C or lower, and more preferably 1.6°C or lower. If the glass transition temperature of the expanded particles is 2.0°C or lower, it is possible to obtain a P3HA-based resin in-mold expanded product having excellent strength even when used in an extremely low temperature environment. Although not particularly limited, the lower limit of the glass transition temperature of the expanded particles is, for example, -6.5°C or higher, preferably -6.0°C or higher, more preferably -5.5°C or higher, and even more preferably -5.0°C or higher. In particular, when the lower limit of the glass transition temperature of the expanded particles is -5.0°C or higher, there is such an effect as having excellent shrinkage.

(Expansion rate of expanded particles)

The expansion rate of the expanded particles is preferably 20 times to 60 times, more preferably 20 times to 50 times, even more preferably 23 times to 50 times, and particularly preferably 25 times to 40 times. By using expanded particles having an expansion rate falling within the above ranges, it is possible to obtain an in-mold expanded product that has a balanced combination of mechanical strength and lightness. Examples of the present application shall be referenced for the method for calculating the expansion rate.

(Gel fraction of expanded particles)

The expanded particles have a crosslinked structure. In the present specification, the crosslinked structure of the expanded particles is evaluated by the gel fraction of the expanded particles. The phrase "expanded particles have a crosslinked structure" means that the gel fraction of the expanded particles is 1% by weight or more with respect to 100% by weight of the expanded particles. Examples of the method for crosslinking the expanded particles include, but are not particularly limited, a method for adding a crosslinking agent during the production of the expanded particles as discussed later.

The gel fraction of the expanded particles is preferably 65 by weight to 90% by weight, more preferably 70 by weight to 85% by weight, and even more preferably 72 by weight to 83% by weight, with respect to 100% by weight of the expanded particles. If the gel fraction of the expanded particles is 65% by weight or more with respect to 100% by weight of the expanded particles, there is an advantage that, when an in-mold expanded product is molded, the molding temperatures range of the expanded particles that make it possible to provide a good-quality in-mold expanded product is broad so that productivity is improved. If the gel fraction of the expanded particles is 90% by weight or less, there is such an advantage as being able to obtain an in-mold expanded product having excellent surface appearance.

In an embodiment of the present invention, the gel fraction of the expanded particles is an indicator of the degree of crosslinking of P3HA in the expanded particles. The gel fraction of the expanded particles can be controlled by, for example, the type and/or the amount of the crosslinking agent used. Examples of the present application shall be referenced for the method for measuring the gel fraction of the expanded particles.

(Average cell diameter of expanded particles)

Although not particularly limited, the average cell diameter of the expanded particles is preferably 270 $\mu$m or less and more preferably 250 $\mu$m or less. If the average cell diameter of the expanded particles is 270 $\mu$m or less, there is an advantage that the molding cycle tends to be good. Although not particularly limited, the lower limit of the average cell diameter of the expanded particles is preferably 50 um or more, more preferably 100 um or more, and even more preferably 140 $\mu$m or more. If the average cell diameter of the expanded particles is 50 $\mu$m or more, there is an advantage that by molding the expanded particles, it is possible to obtain an in-mold expanded product that has excellent surface appearance.

In the present specification, specifically, the average cell diameter of expanded particles is obtained by carrying out measurement according to the following processes (1) through (4). (1) An expanded particle is cut at the center thereof with use of a razor (such as a high stainless steel double-beveled blade manufactured by FEATHER Safety Razor Co., Ltd.); (2) then, a resulting cross section of the expanded particle is observed with use of an optical microscope (for example, VHX-100 manufactured by Keyence Corporation) at a magnification of 50 times; (3) in an image obtained by the observation, a straight line is drawn through the center or substantially center of the cross section of the expanded particle; (4) (4-1) the number (n) of cells present on the line is counted, and (4-2) a length of a line segment cut from the straight line at intersections of the straight line and the surface of the expanded particle is measured and regarded as a diameter L of the expanded particle; and (5) an average cell diameter of expanded particles is calculated by the following formula:

$$\text{Average cell diameter } (\mu m) = L/n.$$

(Bulk density of expanded particles)

Although not particularly limited, the bulk density of the expanded particles is preferably 20.0 g/L to 600.0 g/L, more preferably 30.0 g/L to 300.0 g/L, and even more preferably 32.0 g/L to 100.0 g/L. (a) If the bulk density of the expanded particles is 20.0 g/L or more, there is an advantage that a resultant in-mold expanded product tends to have an excellent cushioning property and/or excellent mechanical strength. (b) If the bulk density of the expanded particles is 600.0 g/L or less, there is an advantage that a resultant in-mold expanded product tends to have excellent lightness. Examples of the present application shall be referenced for the method for measuring the bulk density of the expanded particles.

(Method for producing P3HA-based resin expanded particles)

The P3HA-based resin expanded particles in accordance with an embodiment of the present invention are obtained by expanding the aforementioned P3HA-based resin particles. The expansion step in the production method preferably includes:

(a) a dispersion step of dispersing the resin particles, an aqueous dispersion medium, a crosslinking agent, a blowing agent, and, as necessary, a dispersing agent and/or a dispersion auxiliary agent in a vessel;
(b) a temperature increase and pressure increase step of increasing the temperature in the vessel to a certain temperature and increasing the pressure in the vessel to a certain pressure;
(c) a maintaining step of maintaining the temperature in the vessel at the certain temperature and maintaining the pressure in the vessel at the certain pressure; and
(d) a release step of opening one end of the vessel to release a dispersion slurry in the vessel into an area (space) having a pressure lower than the expansion pressure (i.e., pressure in the vessel).

(a) Dispersion step

The dispersion step can also be described as, for example, a step of preparing a dispersion slurry in which resin particles, a crosslinking agent, and a blowing agent, and, as necessary, a dispersing agent, a crosslinking aid, a dispersion auxiliary agent, and/or a plasticizer are dispersed in an aqueous dispersion medium. In the dispersion slurry, the crosslinking agent and the crosslinking aid may not be present because of being consumed by reaction with P3HA in the resin particles, and the blowing agent and the plasticizer may not be present in a dispersed state because of being impregnated in the resin particles.

The vessel is not limited to any particularly one, and is preferably a vessel that can withstand an expansion temperature and an expansion pressure which will be discussed later, and is preferably, for example, a pressure-resistant vessel.

The aqueous dispersion medium is not limited to any particularly one, provided that the aqueous dispersion medium allows the resin particles, the crosslinking agent, the blowing agent, and the like to be uniformly dispersed therein. As the aqueous dispersion medium, for example, tap water and/or industrial water can also be used. From the point that stable production of expanded particles is possible, pure water, such as RO water (water purified by a reverse osmosis membrane method), distilled water, and deionized water (water purified by ion exchange resin), ultrapure water, and the like are preferably used as the aqueous dispersion medium.

The amount of the aqueous dispersion medium used is not particularly limited, and is preferably 100 parts by weight to 1,000 parts by weight with respect to 100 parts by weight of the resin particles.

In the method for producing the expanded particles, a crosslinking agent is used. By using the crosslinking agent, P3HA in resultant expanded particles becomes P3HA with a crosslinking structure. That is, it is possible to obtain P3HA expanded particles having an excellent gel fraction. This brings about an advantage that, when an in-mold expanded product is molded, the molding temperatures range of the expanded particles which make it possible to provide a good-quality in-mold expanded product is broad so as to improve productivity and that it is possible to obtain an in-mold expanded product having excellent internal fusibility at low molding pressures. Since a crosslinking reaction of the P3HA in the resin particles also proceeds in the expansion step, the expansion step can also be described as a crosslinking step.

The crosslinking agent is not particularly limited, provided that the crosslinking agent can crosslink P3HA. As the crosslinking agent, an organic peroxide is preferable. In other words, the P3HA-based expanded particles are preferably cross-linked by an organic peroxide. The organic peroxide may be used in the resin particle production step, in the dispersion step, or in the resin particle production step and the dispersion step. More specifically, in order to react the organic peroxide with the P3HA, the organic peroxide and the P3HA may be melt-kneaded in the resin particle production step, the resin particles and the organic peroxide may be dispersed in the aqueous dispersion medium in the dispersion step, or the organic peroxide and the P3HA may be melt-kneaded, and further, the resin particles and the organic peroxide may be dispersed in the aqueous dispersion medium. In the dispersion step, the resin particles produced in the resin particle production step and the organic peroxide are dispersed in the aqueous dispersion medium, so that the resin particles can be impregnated and reacted with the organic peroxide. For these reasons, in the method for producing the expanded particles, an organic peroxide is preferable as the crosslinking agent. Note that, when an organic peroxide is used as the crosslinking agent, the cross-linking structure is formed by direct binding of molecular chains of P3HA (bypassing a structure derived from the crosslinking agent).

Although depending on the type of P3HA used and the like, the organic peroxide used as a crosslinking agent has a 1-hour half-life temperature of preferably 90°C to 160°C, more preferably 105°C to 125°C, and even more preferably 110°C to 125°C. Specific examples of such an organic peroxide includes benzoyl peroxide (BPO; 1-hour half-life temperature: 92°C), t-butylperoxy-2-ethylhexyl carbonate (TBEC; 1-hour half-life temperature: 121°C), t-butylperoxyisopropyl carbonate (TBIC; 1-hour half-life temperature: 118°C), t-amylperoxy-2-ethylhexyl carbonate (TAEC; 1-hour half-life temperature: 117°C), t-amylperoxyisopropyl carbonate (TAIC; 1-hour half-life temperature: 115°C), t-butylperoxyisobutyrate (1-hour half-life temperature: 93°C), t-butylperoxy-2-ethylhexanoate (1-hour half-life temperature: 95°C), t-butylperoxyisononanoate (1-hour half-life temperature: 123°C), t-butylperoxyacetate (1-hour half-life temperature: 123°C), t-butylperoxydibenzoate (1-hour half-life temperature: 125°C), t-amylperoxyisobutyrate (1-hour half-life temperature: 93°C), t-amylperoxy-2-ethylhexanoate (1-hour half-life temperature: 92°C), t-amylperoxyisonanoate (1-hour half-life temperature: 114°C), t-amylperoxyacetate (1-hour half-life temperature: 120°C), t-amylperoxybenzoate (1-hour half-life temperature: 122°C), dicumyl peroxide (1-hour half-life temperature: 137°C), 2,5-dimethyl-2,5-di(t-butylperoxy) hexane (1-hour half-life temperature: 140°C), dit-butyl peroxide (1-hour half-life temperature: 149°C), 1,1-bis(t-butylperoxy)cyclohexane (TBCH; 1-hour half-life temperature: 116°C), 2,2-di(t-butylperoxy)butane (1-hour half-life temperature: 127°C), 1,1-di(t-amylperoxy)cyclohexane (1-hour half-life temperature: 112°C), and 1,1-di(t-butylperoxy)3,3,5-trimethylcyclohexane (1-hour half-life temperature: 114°C). The use of an organic peroxide having a 1-hour half-life temperature of 90°C or higher has an advantage that expanded particles of a desired gel fraction tend to be obtained. The use of an organic peroxide having a 1-hour half-life temperature of 160°C or lower has an advantage that an unreacted crosslinking agent is unlikely to remain in a final product.

As an organic peroxide used as a crosslinking agent, an organic peroxide having a t-butoxy group and/or a cumyloxy group is even more preferable because such an organic peroxide brings the crosslinking of P3HA in the resultant expanded particles close to uniform crosslinking. Specific examples of the peroxide having a t-butoxy group and/or a cumyloxy group include t-butylperoxy-2-ethylhexyl carbonate (TBEC), t-butylperoxyisopropyl carbonate (TBIC), t-butylperoxyisobutyrate, t-butylperoxy-2-ethylhexanoate, t-butylperoxyisononanoate, t-butylperoxyacetate, t-butylperoxydibenzoate, dicumyl peroxide, 2,5-dimethyl-2,5-di(t-butylperoxy)hexane, di-t-butyl peroxide, 1,1-bis(t-butylperoxy)cyclohexane (TBCH), 2,2-di(t-butylperoxy)butane, and 1,1-di(t-butylperoxy)3,3,5-trimethylcyclohexane. When an organic peroxide having a t-butoxy group and/or a cumyloxy group is used, there is also an advantage of having less environmental impact in comparison with organic peroxides without t-butoxy groups and/or cumyloxy groups (e.g., BPO). Among the organic peroxides having t-butoxy groups and/or cumyloxy groups, an organic peroxide having a t-butoxy group and/or a cumyloxy group and having a peroxycarbonate group is preferable because such an organic peroxide brings the crosslinking of P3HA in the resultant expanded particles close to uniform crosslinking.

The inventors of the present invention novelly found that using, as a crosslinking agent, an organic peroxide having a t-butoxy group and/or a cumyloxy group surprisingly makes it possible to easily obtain expanded particles with internal pressure that is less likely to decrease. Therefore, when an organic peroxide having a t-butoxy group and/or cumyloxy group is used as a crosslinking agent, it is possible to easily obtain expanded particles that make it possible, with a lower internal pressure than in the cases of the conventional technologies, to provide an in-mold expanded product having excellent fusibility.

Although not particularly limited, the amount of the crosslinking agent(s) used is preferably 0.1 parts by weight to 5.0 parts by weight, more preferably 0.3 parts by weight to 3.0 parts by weight, even more preferably 0.5 parts by weight to 3.0 parts by weight, and still even more preferably 1.0 part by weight to 3.0 parts by weight, with respect to 100 parts by weight of the resin particles. When the amount of the crosslinking agent(s) used is 0.1 parts by weight or more with respect to 100 parts by weight of the resin particles, (a) it is possible to sufficiently crosslink resulting expanded particles, and (b) the closed cell ratio of the resulting expanded particles becomes high, so that it is possible to obtain an in-mold expanded product having good surface appearance and little molding shrinkage. When the amount of the crosslinking agent(s) used is 5.0 parts by weight or less with respect to 100 parts by weight of the resin particles, an effect corresponding to the amount of the crosslinking agent used is obtained, and economical waste is thus unlikely to occur. The amount of the crosslinking agent(s) used is positively correlated with the gel fraction of expanded particles and has a great influence on the value of the gel fraction of expanded particles. Therefore, it is desirable to strictly set the amount of the crosslinking agent(s) used in view of the gel fraction of resultant expanded particles. There are cases where the resin particles used in the dispersion step already contain a crosslinking agent. In such a case, it is preferable that the total amount of the crosslinking agent already contained in the resin particles before the dispersion step and the crosslinking agent used in the dispersion step satisfies the aforementioned range.

Examples of the blowing agent include: inorganic gases such as nitrogen, carbon dioxide, and air; saturated hydrocarbons each having 3 to 5 carbon atoms such as propane, normal butane, isobutane, normal pentane, isopentane, and neopentane; ethers such as dimethyl ether, diethyl ether, and methyl ethyl ether; halogenated hydrocarbons such as monochlormethane, dichloromethane, and dichlorodifluoroethane; and water. As the blowing agent, at least one selected from the group consisting of the above-described inorganic gases, saturated hydrocarbons each having 3 to 5 carbon atoms, ethers, halogenated hydrocarbons, and water can be used. Among these blowing agents, nitrogen or carbon dioxide is preferably used as the blowing agent from the viewpoint of environmental load and expansion power. One of these blowing agents may be used alone, or two or more thereof may be used in admixture. When two or more blowing agents are used in admixture, a mixing ratio may be adjusted as appropriate according to the purpose.

Although not particularly limited, the amount of the blowing agent used is preferably 2 parts by weight to 10,000 parts by weight, more preferably 5 parts by weight to 5,000 parts by weight, and even more preferably 10 parts by weight to 1,000 parts by weight, with respect to 100 parts by weight of the resin particles. If the amount of the blowing agent to be used is 2 parts by weight or more with respect to 100 parts by weight of resin particles, it is possible to obtain expanded particles having suitable density. If the amount of the blowing agent to be used is 10,000 parts by weight or less with respect to 100 parts by weight of resin particles, the effect according to the amount of the blowing agent used can be achieved, and is therefore no economical waste will be incurred.

In the expanded particle production method, it is preferable to use a dispersing agent. The use of the dispersing agent has an advantage of making it possible to suppress agglomeration (which may be referred to as blocking) of the resin particles to each other and making it possible to produce expanded particles stably. Examples of the dispersing agent include inorganic substances such as tertiary calcium phosphate, tertiary magnesium phosphate, basic magnesium carbonate, calcium carbonate, barium sulfate, kaolin, talc, clay, aluminum oxide, titanium oxide, and aluminum hydroxide. One of these dispersing agents may be used alone, or two or more thereof may be used in admixture. When two or more dispersing agents are used in admixture, a mixing ratio may be adjusted as appropriate according to the purpose. Although not particularly limited, the amount of dispersing agent used is preferably 0.1 parts by weight to 3.0 parts by weight and more preferably 0.5 parts by weight to 1.5 parts by weight, with respect to 100 parts by weight of the resin particles.

When the resin particles are impregnated and reacted with the crosslinking agent and, as necessary, the crosslinking aid in the dispersion step, it is preferable to lower the oxygen concentration in the vessel and the dissolved oxygen content of the dispersion slurry in order to increase the crosslinking efficiency of P3HA. Examples of the method for reducing the oxygen concentration in the vessel and the dissolved oxygen content of the dispersion slurry include replacing a gas in the vessel and the gas dissolved in the dispersion slurry with inorganic gases such as carbon dioxide and nitrogen, and vacuuming the gas in the vessel.

In the expanded particle production method, a dispersion auxiliary agent may be used to improve the effect of suppressing the agglomeration of the resin particles to each other. Examples of the dispersion auxiliary agent include anionic surfactants such as sodium alkanesulfonate, sodium alkylbenzene sulfonate, and sodium $\alpha$-olefin sulfonate. One of these dispersion auxiliary agents may be used alone, or two or more thereof may be used in admixture. When two or more dispersion auxiliary agents are used in admixture, a mixing ratio may be adjusted as appropriate according to the purpose.

Although not particularly limited, the amount of the dispersion auxiliary agent used is preferably 0.001 parts by weight to 0.5 parts by weight and more preferably 0.01 parts by weight to 0.2 parts by weight, with respect to 100 parts by weight of the resin particles. In order to further improve the effect of suppressing the agglomeration of the resin particles to each other, it is preferable that the dispersing agent and the dispersion auxiliary agent are used in combination.

(b) Temperature increase and pressure increase step and (c) maintaining step

The temperature increase and pressure increase step is preferably carried out after the dispersion step, and the maintaining step is preferably carried out after the temperature increase and pressure increase step. In the present specification, a certain temperature in the temperature increase and pressure increase step and in the maintaining step may be referred to as an expansion temperature, and a certain pressure in the temperature increase and pressure increase step and in the maintaining step may be referred to as an expansion pressure.

The expansion temperature cannot be generally defined because the expansion temperature varies depending on, for example, the type of P3HA, the type of blowing agent, and a desired apparent density of expanded particles. The expansion temperature is preferably set to a temperature lower than the melting point (Tmp) of the resin particles before the expansion. The expansion temperature is, for example, preferably (Tmp-40)°C to Tmp°C, more preferably (Tmp-30)°C to (Tmp-10)°C, even more preferably (Tmp-20)°C to (Tmp-15)°C, and most preferably (Tmp-19)°C to (Tmp-16)°C. When the expansion temperature is (Tmp-40)°C or higher, expanded particles that have suitable density tend to be obtained. When the expansion temperature is Tmp°C or lower, hydrolysis of the resin particles in the vessel is unlikely to occur.

In an embodiment of the present invention, the expansion temperature satisfies the aforementioned temperature ranges and is preferably 130.0°C or higher. An expansion temperature that satisfies the aforementioned temperature ranges and is 130.0°C or higher brings about the effects of being able to obtain expanded particles having good bulk density and being able to shorten the maintaining time. It should be noted that components other than P3HA contained in the resin particles (for example, additives) hardly have any effects on the melting point of the resin particles. In other words, the melting point of the resin particles can be said to be the melting point of the P3HA contained in the resin particles.

In the temperature increase and pressure increase step, the rate at which the temperature is increased to a desired expansion temperature (hereinafter may be referred to as a temperature increase rate) is preferably 1.0°C/min to 3.0°C/min and more preferably 1.5°C/min to 3.0°C/min. If the temperature increase rate is 1.0°C/min or more, excellent productivity is achieved. In a case where the temperature increase rate is 3.0°C/min or less, insufficient impregnation of the resin particles with the blowing agent and insufficient reaction of the crosslinking agent and P3HA are unlikely to occur at the increase in temperature.

The expansion pressure is, for example, preferably 1.0 MPa (gage pressure) to 10.0 MPa (gage pressure), more preferably 2.0 MPa (gage pressure) to 5.0 MPa (gage pressure), more preferably 2.5 MPa (gage pressure) to 4.5 MPa (gage pressure), even more preferably 3.0 MPa (gage pressure) to 4.0 MPa (gage pressure), still even more preferably 3.1 MPa (gage pressure) to 3.5 MPa (gage pressure), and particularly preferably 3.2 MPa (gage pressure) to 3.4 MPa (gage pressure). With an expansion pressure of 1.0 MPa (gage pressure) or more, it is possible to obtain expanded particles having suitable density.

In the maintaining step, a period of time (maintaining time) for which the dispersion slurry in the vessel is maintained at around the expansion temperature and the expansion pressure is not particularly limited. The maintaining time is preferably 1 minute to 120 minutes, more preferably 5 minutes to 100 minutes, even more preferably 10 minutes to 80 minutes, and particularly preferably 15 minutes to 70 minutes. When the maintaining time is 1 minute or more, an unreacted crosslinking agent is unlikely to remain. When the maintaining time is 120 minutes or less, unnecessary hydrolysis of P3HA contained in the resin particles is unlikely to occur.

(d) Release step

The release step is preferably carried out after the temperature increase and pressure increase step or after the maintaining step. The release step allows the resin particles to be expanded, with the result that expanded particles are obtained.

In the release step, an "area having a pressure lower than the expansion pressure" is intended to mean an "area under pressure lower than the expansion pressure" or a "space under pressure lower than the expansion pressure", and can also be described as an "atmosphere having a pressure lower than the expansion pressure". The area having a pressure lower than the expansion pressure is not particularly limited, provided that the pressure is lower than the expansion pressure, and may be, for example, an area under atmospheric pressure.

In the release step, when the dispersion slurry is released into the area having a pressure lower than the expansion pressure, the dispersion slurry can also be released through an open orifice with a diameter of 1 mm to 5 mm for the purpose of, for example, adjusting the flow rate of the dispersion slurry and decreasing variations in the expansion ratio of the resulting expanded particles. In addition, in a case where resin particles with a relatively high melting point are used, the area (space) having a pressure lower than the expansion pressure may be filled with saturated steam for the purpose of improving expandability.

(Second-stage expansion step)

In the above-described expanded particle production method, there is a case where expanded particles having a desired apparent density cannot be obtained by the expansion step alone. In that case, the expanded particle production method may further include a second-stage expansion step to further expand the expanded particles obtained in the expansion step. The second-stage expansion step is not particularly limited, provided that, by further expanding the expanded particles having been obtained in the expansion step, expanded particles having an apparent density even lower than the apparent density of the expanded particles having been obtained in the expansion step. For example, an aspect of the second-stage expansion step is as follows: (s1) The expanded particles having been obtained in the expansion step are supplied into the vessel. (s2) The inorganic gas, such as air or carbon dioxide, is supplied into the vessel to increase the pressure in the vessel. (s3) By (s2) above, the expanded particles are impregnated with the inorganic gas to make the pressure in the expanded particles higher than normal pressure. (s4) Then, the expanded particles are further expanded by heating with steam or the like to obtain expanded particles having a desired apparent density. The expanded particles obtained in the second-stage expansion step may be referred to as second-stage expanded particles. In addition, in a case where the second-stage expansion step is carried out, the expansion step may be referred to as first-stage expansion step, and the expanded particles obtained in the first-stage expansion step may be referred to as first-stage expanded particles.

The gel fraction of the second-stage expanded particles preferably has the same aspect as the gel fraction of the expanded particles. That is, the description in the section on the gel fraction applies as appropriate to the gel fraction of the second-stage expanded particles.

[3. P3HA-based resin in-mold expanded product]

A P3HA-based resin in-mold expanded product in accordance with an embodiment of the present invention is obtained by molding the P3HA-based resin expanded particles. The step of molding the P3HA-based resin expanded particles includes a pressurization step, a filling step, and an expansion molding step. In the present specification, "poly(3-hydroxyalkanoate) in-mold expanded product" may also be referred to as "in-mold expanded product".

The present in-mold expanded product production method (i.e., a method for subjecting expanded particles to molding) is not particularly limited, and a known method can be employed. Examples of such a method include, but are not particularly limited to, the following in-mold expansion molding methods (A) to (D):

(A) A method in which the present expanded particles are pressurized with inorganic gas in a vessel so that the expanded particles are impregnated with the inorganic gas and have a given internal pressure, after which the expanded particles are filled into a mold and heated with steam;

(B) A method in which the present expanded particles are filled into a mold, compressed to reduce the volume in the mold by 10% to 75%, and heated with steam;

(C) A method in which the present expanded particles are compressed with gas pressure, filled into a mold, and heated with steam while compression recovery of the expanded particles is utilized; and

(D) A method in which the present expanded particles are filled into a mold and heated with steam without any particular pretreatment.

In the production for the present in-mold expanded product, the pressure of steam for heating the present expanded particles (hereinafter may be referred to as a molding pressure) varies depending on the properties of the expanded particles to be used and the like and cannot be generally defined. The molding pressure is preferably 0.05 MPa to 0.30 MPa (gauge pressure), more preferably 0.08 MPa to 0.25 MPa (gauge pressure), and even more preferably 0.10 MPa to 0.20 MPa (gauge pressure).

As the inorganic gas in the method (A) among the present in-mold expanded product production methods, at least one selected from the group consisting of air, nitrogen, oxygen, carbon dioxide, helium, neon, argon, and the like can be used. Among these inorganic gases, air and/or carbon dioxide is preferable.

A temperature in the vessel when the expanded particles are impregnated with the inorganic gas in the method (A) among the present in-mold expanded product production methods is preferably 10°C to 90°C, more preferably 20°C to 90°C, more preferably 30°C to 90°C, and even more preferably 40°C to 90°C.

The internal pressure of the expanded particles in the method (A) among the present in-mold expanded product production methods is preferably 0.10 MPa to 0.30 MPa (absolute pressure), more preferably 0.11 MPa to 0.25 MPa (absolute pressure), and even more preferably 0.12 MPa to 0.20 MPa (absolute pressure). Measurement of the internal pressure of the expanded particles is carried out in accordance with the measurement method described in the Examples which will be discussed later.

The expansion rate of the P3HA-based resin in-mold expanded product obtained as discussed above is preferably 20 times to 60 times, more preferably 23 times to 50 times, and even more preferably 25 times to 40 times. If the expansion rate falls within the above ranges, it is possible to provide an in-mold expanded product that has a balanced combination of mechanical strength and lightness. Examples of the present application shall be referenced for the method for calculating the expansion rate.

The P3HA-based resin in-mold expanded product in accordance with an embodiment of the present invention can be used for various applications. For example, the P3HA-based resin in-mold expanded product can be suitably used even when, for example, food containers, cushioning materials for packaging, produce boxes, fish boxes, and low-temperature transport containers are used in low-temperature environments.

The present invention is not limited to the embodiments, but can be altered by a skilled person in the art within the scope of the claims. The present invention also encompasses, in its technical scope, any embodiment derived by combining technical means disclosed in differing embodiments.

An aspect of the present invention includes the following.

<1> Poly(3-hydroxyalkanoate)-based resin expanded particles obtained by expanding resin particles that contain poly(3-hydroxyalkanoate)-based resin, in which:

the resin particles contain two or more types of poly(3-hydroxyalkanoate)-based resins that differ in structural unit composition from each other; and
the poly(3-hydroxyalkanoate)-based resin expanded particles have a glass transition temperature of 2.0°C or lower.

<2> The poly(3-hydroxyalkanoate)-based resin expanded particles according to <1>, in which:

the resin particles contain, as the poly(3-hydroxyalkanoate)-based resin, a copolymer having 3-hydroxybutyrate units and comonomer units; and

an average content ratio of the comonomer units in 100 mol% of all repeating units in the copolymer is 6.5 mol% to 12.0 mol%.

<3> The poly(3-hydroxyalkanoate)-based resin expanded particles according to <1> or <2>, in which:

the resin particles contain, as the poly(3-hydroxyalkanoate)-based resin, a copolymer having 3-hydroxybutyrate units and comonomer units; and

the resin particles contain a copolymer (A) in which a content ratio of comonomer units is 1.0 mol% to 6.0 mol% and a copolymer (B) in which a content ratio of comonomer units is 13.0 mol% or more.

<4> The poly(3-hydroxyalkanoate)-based resin expanded particles according to <3>, in which a ratio of the copolymer (A) to a total of the copolymer (A) and the copolymer (B) which represents 100% by weight is 65% by weight or more.

<5> The poly(3-hydroxyalkanoate)-based resin expanded particles according to any one of <1> through <4>, in which the resin particles contain poly(3-hydroxybutyrate-co-3-hydroxyhexanoate).

<6> The poly(3-hydroxyalkanoate)-based resin expanded particles according to any one of <1> through <5>, in which an expansion rate of the poly(3-hydroxyalkanoate)-based resin expanded particles is 20 times to 50 times.

<7> The poly(3-hydroxyalkanoate)-based resin expanded particles according to any one of <1> through <6>, in which a gel fraction is 65 by weight to 90% by weight with respect to 100% by weight of the poly(3-hydroxyalkanoate)-based resin expanded particles.

<8> The poly(3-hydroxyalkanoate)-based resin expanded particles according to any one of <1> through <7>, in which a bulk density is 20.0 g/L to 600.0 g/L.

<9> A poly(3-hydroxyalkanoate)-based resin in-mold expanded product obtained by molding the poly(3-hydroxyalkanoate)-based resin expanded particles according to any one of <1> through <8>.

Examples

The following description will discuss embodiments of the present invention in further detail on the basis of Examples. However, the present invention is not limited by the Examples.

[Materials]

Substances used in the Examples and Comparative Example are presented below.

(Poly(3-hydroxyalkanoate))

· P3HA-1: The P3HA-1 used was P3HB3HH (monomer ratio: 3HB/3HH = 94.5/5.5 (mol%/mol%)), and was prepared according to the method disclosed in Example 1 of International Publication No. WO 2019/142845.
· P3HA-2: The P3HA-2 used was P3HB3HH (monomer ratio: 3HB/3HH = 98/2 (mol%/mol%)) and was prepared according to the method disclosed in Example 2 of International Publication No. WO 2019/142845.
· P3HA-3: The P3HA-3 used was P3HB3HH (monomer ratio: 3HB/3HH = 72/28 (mol%/mol%)) and was prepared according to the method disclosed in Example 9 of International Publication No. WO 2019/142845.

(Crystal nucleating agent)

· Pentaerythritol (Neulizer P, manufactured by Mitsubishi Chemical Corporation)

(Cell adjusting agent)

· Talc (Micro Ace K1, manufactured by Nippon Talc Co., Ltd.) (Lubricant)
· Behenic acid amide (BNT-22H, manufactured by Nippon Fine Chemical)
· Erucic acid amide (NEUTRON-S, manufactured by Nippon Fine Chemical)

(Blowing agent)

· Carbon dioxide (manufactured by Air Water Inc.)
· Nitrogen (manufactured by Air Water Inc.)

(Crosslinking agent)

· 1,1-di(t-butylperoxy)cyclohexane (TBCH: PERHEXA C manufactured by Nichiyu Corporation)

(Dispersing agent)

· Tertiary calcium phosphate (manufactured by Taihei Chemical Industrial Co., Ltd.)

(Dispersion auxiliary agent)

· Sodium alkanesulfonate (LATEMUL PS, manufactured by Kao Corporation)

[Measurement method]

In Examples and Comparative Example, measurement and evaluation were carried out by the following methods.

(Measurement of glass transition temperature)

The glass transition temperature of the P3HA-based resin particles and the P3HA-based resin expanded particles were measured using a differential scanning calorimeter (DSC6200 type manufactured by Seiko Instruments Inc.). The specific procedures were as follows: (1) 2 mg of P3HA was weighed; (2) the temperature of the P3HA was raised from - 50°C to 190°C at a temperature increase rate of 10°C/min to melt the P3HA; and (3) on the DSC curve of the P3HA obtained in the step (2), determined as the glass transition temperature was the point where a straight which is line equally distant, in the direction of the vertical axis, from the extended low temperature-side baseline and the extended high temperature-side baseline intersects the curve at the step-like change portion of the glass transition.

(Measurement of gel fraction)

The P3HA-based resin gel fraction of the expanded particles was measured according to the following procedures (1) through (5): (1) In a 150-ml flask, 1 g of expanded particles and 100 ml of chloroform were placed; (2) the mixture in the flask was heat-refluxed for 8 hours at 62°C under atmospheric pressure; (3) the resultant heat-treated product was filtered with use of a suction filtration device equipped with a 100-mesh metal gauze; (4) the filtration-treated product on the metal gauze was dried in an oven at 80°C for 8 hours, and the dried product weight Wg (g) was measured; (5) the gel fraction was calculated by the following formula: Gel fraction (% by weight) = Wg/1 $\times$ 100.

(Evaluation of dynamic test)

As a dynamic test of the P3HA-based resin in-mold expanded product, a breakage test was conducted using ACST-200 (manufactured by SHINYEI Technology Co., Ltd.) and M130-4290 (manufactured by Kyowa Electronic Instruments Co., Ltd.) under the following conditions: the drop height was 885 mm; the drop method was free fall; the strain was 80% or more; and the sample size was 100 mm × 100mm × 50 mm (without skin).

The breakage test was conducted according to the following procedures: (1) the sample was placed on a platform, and a weight was lifted to a height (drop height) of 885 mm above the sample; and (2) the stopper holding the weight was released to allow the weight to free fall onto the sample.

The evaluation was made by preparing three samples of each of the P3HA-based resin in-mold expanded products of Examples and Comparative Example, and the three samples thus prepared were subjected to the breakage test at a test temperature of -10°C. If none of the three samples exhibited any breakage and/or cracks, the test temperature was lowered by 5°C, and the same breakage test was repeated. The lowest temperature at which none of the three samples exhibited any breakage and/or cracks was regarded as the dynamic drop test passing temperature.

(Measurement of bulk density and calculation of expansion rate)

The bulk density of the P3HA-based resin expanded particles was measured according to the following procedures (1) through (3): (1) the weight W (g) of the expanded particles was measured; (2) the entire amount of the expanded particles with the weight W was placed into a graduated cylinder, and the volume V (L) of the expanded particles was measured; and (3) the bulk density of the expanded particles was calculated according to the following formula: Bulk density (g/L) = W/V.

The expansion rate of the P3HA-based resin expanded particles was calculated using the bulk density by the following formula: Expansion rate = specific gravity (1200) of P3HA-based resin expanded particles / bulk density.

(DSC peak area (melting heat quantity))

The DSC peak area was measured according to the following procedures (1) through (4): (1) approximately 2 mg of the expanded particles was weighed out; (2) a differential scanning calorimeter (DSC6200 type manufactured by Seiko Instruments Inc.) was used to raise the temperature from 10°C to 190°C at a temperature increase rate of 10°C/min to melt the expanded particles; (3) on the DSC curve obtained in the step (2), a baseline was created by connecting, with a straight line, the point that indicates the temperature (80°C) at the start of melting and the point that indicates the melting end temperature; and (4) the region enclosed by the created baseline and the DSC curve was taken as the DSC peak area, and the quantity of heat calculated from the DSC peak area was regarded as the melting heat quantity of the expanded particles.

(Shrinkage of in-mold expanded product)

The shrinkage of the in-mold expanded product was measured and evaluated according to the following procedures (1) through (3): (1) the longitudinal length t (mm) of the in-mold expanded product was measured; (2) the length K (mm) in the direction corresponding to the longitudinal direction of the in-mold expanded product within the molding space of the mold used for in-mold expansion molding of the in-mold expanded product was measured; and (3) the shrinkage of the in-mold expanded product was calculated according to the following formula: shrinkage (%) = {(K-t)/K}×100.

[Example 1]

<Resin particle production step>

A twin-screw extruder (TEM-26SX, manufactured by Toshiba Machine Co., Ltd.) was used for melt-kneading of the P3HA-based composition. The P3HA-based composition was prepared as follows: 86 parts by weight of P3HA-1, 7 parts by weight of P3HA-2, 7 parts by weight of P3HA-3, 0.10 parts by weight of talc as a cell adjusting agent, 1.0 part by weight of pentaerythritol as a crystal nucleating agent, 0.50 parts by weight of behenic acid amide as a lubricant, and 0.5 parts by weight of erucic acid amide as a lubricant, with respect to 100 parts by weight of the P3HA-based resin composition, were weighed and dry blended. The prepared P3HA-based composition was supplied to the twin-screw extruder and was melt-kneaded at a cylinder set temperature of 130.0°C to 160°C (melt-kneading step). The melt-kneaded P3HA-based composition at 180°C was discharged from the nozzle of a die attached to the tip of the extruder. The discharged P3HA-based composition was water-cooled at 43°C and then cut to obtain cylindrical P3HA-based resin particles with a length/diameter ratio of 2.5 (particle molding step). The melting point of the resin particles obtained was 148.4°C. Subsequently, the glass transition temperature of the resin particles obtained was measured by the aforementioned method.

<Expanded particle production step>

100 parts by weight of the P3HA-based resin particles obtained in the <Resin particle production step>, 1.8 parts by weight of TBCH as a crosslinking agent, 350 parts by weight of pure water, 1.8 parts by weight of tertiary calcium phosphate as a dispersing agent, and 0.15 parts by weight of sodium alkanesulfonate as a dispersion auxiliary agent were supplied to a pressure-resistant vessel. The raw materials in the pressure-resistant vessel were stirred. The contents (dispersion slurry) in the pressure-resistant vessel were stirred until the dispersion slurry was fully released.

The pressure-resistant vessel was sufficiently ventilated with carbon dioxide gas to remove oxygen inside the pressure-resistant vessel. Furthermore, carbon dioxide was supplied as a blowing agent into the pressure-resistant vessel to prepare a dispersion slurry (dispersion step). Subsequently, the temperature inside the pressure-resistant vessel was raised to an expansion temperature of 131.0°C. Furthermore, carbon dioxide was supplied to the pressure-resistant vessel to increase the pressure inside the pressure-resistant vessel to an expansion pressure of 3.3 MPa (gage pressure) (temperature increase and pressure increase step). Next, the temperature and the pressure inside the pressure-resistant vessel were maintained near the expansion temperature and the expansion pressure, respectively, for 20 minutes (maintaining step). After the maintaining step, a valve at the bottom of the pressure-resistant vessel was opened, and the dispersion slurry in the pressure-resistant vessel was released through an opening orifice of 3.6 mm in diameter under atmospheric pressure to obtain P3HA-based expanded particles (release step). The dispersing agent and the like adhering to the surfaces of the expanded particles were washed with water, and then the expanded particles were dried at 75°C. For the expanded particles obtained by drying, glass transition temperature measurement, gel fraction measurement, bulk density measurement, expansion rate calculation, and melting heat quantity measurement were performed by the respective aforementioned methods.

<In-mold expanded product production step>

The expanded particles were supplied to a pressure-resistant vessel at 80°C. While the temperature inside the pressure-resistant vessel was maintained at 80°C, the expanded particles inside the pressure-resistant vessel were pressurized using air, and the internal pressure of the expanded particles was set to 0.16 MPa (absolute pressure). The pressure-resistant vessel was cooled to room temperature, and the expanded particles inside the pressure-resistant vessel (expanded particles imparted with the internal pressure) were taken out (pressurization step).

The mold used had a molding space of 370 mm (height) × 320 (width) mm × 80 mm (thickness) and was mounted on a molding machine (EP-900 manufactured by DAISEN). The molding space of the mold with a gap of 4.0 mm was filled, using a filling machine, with the expanded particles imparted with the internal pressure in the pressurization step (filling step).

Next, after the movable mold was driven toward the stationary mold to completely close the mold, the mold was preheated with steam, and then the mold was further subjected to one-side heating and other-side heating with steam, and then the mold was further subjected to both-side heating with steam. Through this operation, the filled expanded particles were fused together to obtain an in-mold expanded product (expansion molding step). It should be noted here that the steam pressure (steam pressure A) during the one-side heating and the other-side heating was set to 0.06 MPa (gage pressure), and the steam pressure (steam pressure B) during the both-side heating was set to 0.13 MPa (gage pressure). The in-mold expanded product obtained was taken out from the mold and was dried at 75°C. The dried in-mold expanded product was subjected to a dynamic test to measure the dynamic drop test passing temperature and measure the shrinkage.

[Example 2]

The resin particles, the expanded particles, and the in-mold expanded product were produced as in Example 1 except that 80 parts by weight of P3HA-1, 10 parts by weight of P3HA-2, and 10 parts by weight of P3HA-3 were used in the melt-kneading step. The melting point of the resin particles obtained was 149.5°C. For the expanded particles obtained, glass transition temperature measurement, gel fraction measurement, bulk density measurement, expansion rate calculation, and melting heat quantity measurement were performed as in Example 1. Also for the in-mold expanded product obtained, the dynamic drop test passing temperature was measured, and the shrinkage was measured as in Example 1.

[Example 3]

The resin particles, the expanded particles, and the in-mold expanded product were produced as in Example 1 except that 60 parts by weight of P3HA-1, 20 parts by weight of P3HA-2, and 20 parts by weight of P3HA-3 were used in the melt-kneading step. The melting point of the resin particles obtained was 152.9°C. For the expanded particles obtained, glass transition temperature measurement, gel fraction measurement, bulk density measurement, expansion rate calculation, and melting heat quantity measurement were performed as in Example 1. Also for the in-mold expanded product obtained, the dynamic drop test passing temperature was measured, and the shrinkage was measured as in Example 1.

[Example 4]

The resin particles, the expanded particles, and the in-mold expanded product were produced as in Example 1 except that 40 parts by weight of P3HA-1, 30 parts by weight of P3HA-2, and 30 parts by weight of P3HA-3 were used in the melt-kneading step. The melting point of the resin particles obtained was 155.0°C. For the expanded particles obtained, glass transition temperature measurement, gel fraction measurement, bulk density measurement, expansion rate calculation, and melting heat quantity measurement were performed as in Example 1. Also for the in-mold expanded product obtained, the dynamic drop test passing temperature was measured, and the shrinkage was measured as in Example 1.

[Comparative Example 1]

The resin particles, the expanded particles, and the in-mold expanded product were produced as in Example 1 except that 100 parts by weight of P3HA-1 was used and neither P3HA-2 nor P3HA-3 was used in the melt-kneading step. The melting point of the resin particles obtained was 145.3°C. For the expanded particles obtained, glass transition temperature measurement, gel fraction measurement, bulk density measurement, expansion rate calculation, and melting heat quantity measurement were performed as in Example 1. Also for the in-mold expanded product obtained, the dynamic drop test passing temperature was measured, and the shrinkage was measured as in Example 1.

[Evaluation results]

Table 1 shows the results of glass transition temperature measurement, gel fraction measurement, bulk density measurement, expansion rate calculation, and melting heat quantity measurement for the P3HA-based resin particles, the results of glass transition temperature measurement for the P3HA-based resin expanded particles, and the dynamic test evaluation results and shrinkage measurement results for the P3HA-based resin in-mold expanded products in Examples and Comparative Example.

[Table 1]

| | | | Example 1 | Example 2 | Example 3 | Example 4 | Comparative Example 1 |
|---|---|---|---|---|---|---|---|
| | | 3HH ratio | | | | | |
| P3HB3HH | P3HA-1 | 5.5 | 86 | 80 | 60 | 40 | 100 |
| | P3HA-2 | 2 | 7 | 10 | 20 | 30 | 0 |
| | P3HA-3 | 28 | 7 | 10 | 20 | 30 | 0 |
| Average 3HH ratio (%) | | | 6.8 | 7.4 | 9.3 | 11.2 | 5.5 |
| Tg (°C) | Resin particles | | 0.0 | -0.6 | -4.2 | -6.7 | 2.0 |
| | Expanded particles | | 0.4 | -0.7 | -3.7 | -5.2 | 2.8 |
| Expansion temperature (°C) | | | 131.0 | 133.0 | 135.3 | 136.3 | 128.5 |
| Maintaining time (min) in maintaining step | | | 20 | 20 | 20 | 20 | 40 |
| Melting point (°C) of resin particles | | | 148.4 | 149.5 | 152.9 | 155.0 | 145.3 |
| Gel fraction (%) | | | 76 | 78 | 80 | 79 | 75 |
| Expansion ratio (times) | | | 29 | 27 | 27 | 23 | 31 |
| Bulk density (g/L) | | | 40.8 | 43.7 | 44.2 | 53.1 | 38.1 |
| DSC peak area (J/g) | | | 48.2 | 45.6 | 41.7 | 38.6 | 55.0 |

(continued)

|  | Example 1 | Example 2 | Example 3 | Example 4 | Comparative Example 1 |
|---|---|---|---|---|---|
| Dynamic drop test passing temperature (°C) | -30 | -40 | -35 | -30 | -15 |
| Shrinkage (%) | 3.0 | 3.4 | 3.7 | 9.6 | 2.5 |

It was confirmed that as the amount of P3HA-3 used increased and the ratio of 3HH became higher, the glass transition temperature decreased in both the resin particles and the expanded particles. It was also confirmed that as the glass transition temperature decreased, the dynamic drop test passing temperature of the in-mold expanded product tended to be lower. Meanwhile, it was confirmed that approximately when the amount of P3HA-3 used exceeded 20 parts by weight, the shrinkage of the in-mold expanded product tended to increase, leading to a decrease in the performance of the in-mold expanded product. Furthermore, it was confirmed that when the expansion temperature satisfied (Tmp-40)°C to Tmp°C and was 130.0°C or higher, the dynamic drop test passing temperature of the in-mold expanded product was low.

That is, if the P3HA-based resin expanded particles used are obtained by expanding resin particles that contain two or more types of P3HA-based resins that differ in structural unit composition and if the glass transition temperature of the P3HA-based resin expanded particles is 2.0°C or lower, a resultant in-mold expanded product clearly has sufficient strength when used in an extremely low temperature environment (-20°C or lower). Furthermore, it became clear that the P3HA-based resin expanded particles tend to result in an in-mold expanded product with a lower shrinkage; that is, the performance of the in-mold expanded product tends to improve.

Industrial Applicability

An aspect of the present invention can be suitably use for, for example, food containers, cushioning materials for packaging, produce boxes, fish boxes, and low-temperature transport containers.

## Claims

1. Poly(3-hydroxyalkanoate)-based resin expanded particles obtained by expanding resin particles that contain poly(3-hydroxyalkanoate)-based resin, wherein:

   the resin particles contain two or more types of poly(3-hydroxyalkanoate)-based resins that differ in structural unit composition from each other; and
   the poly(3-hydroxyalkanoate)-based resin expanded particles have a glass transition temperature of 2.0°C or lower.

2. The poly(3-hydroxyalkanoate)-based resin expanded particles according to claim 1, wherein:

   the resin particles contain, as the poly(3-hydroxyalkanoate)-based resin, a copolymer having 3-hydroxybutyrate units and comonomer units; and
   an average content ratio of the comonomer units in 100 mol% of all repeating units in the copolymer is 6.5 mol% to 12.0 mol%.

3. The poly(3-hydroxyalkanoate)-based resin expanded particles according to claim 1 or 2, wherein:

   the resin particles contain, as the poly(3-hydroxyalkanoate)-based resin, a copolymer having 3-hydroxybutyrate units and comonomer units; and
   the resin particles contain a copolymer (A) in which a content ratio of comonomer units is 1.0 mol% to 6.0 mol% and a copolymer (B) in which a content ratio of comonomer units is 13.0 mol% or more.

4. The poly(3-hydroxyalkanoate)-based resin expanded particles according to claim 3, wherein a ratio of the copolymer (A) to a total of the copolymer (A) and the copolymer (B) which represents 100% by weight is 65% by weight or more.

5. The poly(3-hydroxyalkanoate)-based resin expanded particles according to claim 1 or 2, wherein the resin particles contain poly(3-hydroxybutyrate-co-3-hydroxyhexanoate).

6. The poly(3-hydroxyalkanoate)-based resin expanded particles according to claim 1 or 2, wherein an expansion rate of the poly(3-hydroxyalkanoate)-based resin expanded particles is 20 times to 50 times.

7. The poly(3-hydroxyalkanoate)-based resin expanded particles according to claim 1 or 2, wherein a gel fraction is 65 by weight to 90% by weight with respect to 100% by weight of the poly(3-hydroxyalkanoate)-based resin expanded particles.

8. The poly(3-hydroxyalkanoate)-based resin expanded particles according to claim 1 or 2, wherein a bulk density is 20.0 g/L to 600.0 g/L.

9. A poly(3-hydroxyalkanoate)-based resin in-mold expanded product obtained by molding the poly(3-hydroxyalkanoate)-based resin expanded particles according to claim 1 or 2.

## INTERNATIONAL SEARCH REPORT

| | International application No. |
|---|---|
| | **PCT/JP2023/005350** |

### A. CLASSIFICATION OF SUBJECT MATTER

***C08J 9/18***(2006.01)i
FI: C08J9/18 ZBP

According to International Patent Classification (IPC) or to both national classification and IPC

### B. FIELDS SEARCHED

Minimum documentation searched (classification system followed by classification symbols)

C08J9/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2007/049694 A1 (KANEKA CORP.) 03 May 2007 (2007-05-03) | 1, 2, 5-9 |
| | claims, paragraphs [0021], [0029]-[0046], examples | |
| A | | 3, 4 |
| X | WO 2019/146555 A1 (KANEKA CORP.) 01 August 2019 (2019-08-01) | 1-9 |
| | claims, paragraphs [0088]-[0127], examples, particularly, example 12 | |
| A | WO 2022/054870 A1 (KANEKA CORP.) 17 March 2022 (2022-03-17) | 1-9 |
| | claims, examples, entire text | |
| A | JP 2007-130763 A (KANEKA CORP.) 31 May 2007 (2007-05-31) | 1-9 |
| | claims, examples, entire text | |
| A | WO 2019/142845 A1 (KANEKA CORP.) 25 July 2019 (2019-07-25) | 1-9 |
| | claims, examples, entire text | |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)** | |
| **3-4-3 Kasumigaseki, Chiyoda-ku, Tokyo 100-8915** | |
| **Japan** | |
| | Telephone No. |

Form PCT/ISA/210 (second sheet) (January 2015)

| | | | INTERNATIONAL SEARCH REPORT<br>Information on patent family members | International application No.<br>**PCT/JP2023/005350** |
|---|---|---|---|---|

| Patent document<br>cited in search report | | | Publication date<br>(day/month/year) | Patent family member(s) | | | Publication date<br>(day/month/year) |
|---|---|---|---|---|---|---|---|
| WO | 2007/049694 | A1 | 03 May 2007 | US | 2009/0197982 | A1 | |
| | | | | claims, paragraphs [0028],<br>[0036]-[0058], examples | | | |
| | | | | EP | 1947127 | A1 | |
| | | | | CN | 101296962 | A | |
| WO | 2019/146555 | A1 | 01 August 2019 | US | 2020/0354539 | A1 | |
| | | | | claims, paragraphs [0100]-<br>[0163], examples | | | |
| | | | | EP | 3744771 | A1 | |
| | | | | CN | 111684001 | A | |
| WO | 2022/054870 | A1 | 17 March 2022 | (Family: none) | | | |
| JP | 2007-130763 | A | 31 May 2007 | (Family: none) | | | |
| WO | 2019/142845 | A1 | 25 July 2019 | US | 2020/0340020 | A1 | |
| | | | | claims, examples | | | |
| | | | | EP | 3741840 | A1 | |
| | | | | CN | 111615555 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146555 A
- WO 2013147139 A
- WO 2009145164 A
- WO 2019142845 A
- WO 2021002092 A

**Non-patent literature cited in the description**

- **T. FUKUI** ; **Y. DOI**. *J. Bateriol.*, 1997, vol. 179, 4821-4830